# EUROPEAN PATENT APPLICATION

(11) **EP 0 899 237 A2**
(43) Date of publication of application: **03.03.1999**
(21) Application number: 98306768.7
(22) Date of filing: 24.08.1998
(51) Int. Cl.: C02F 1/32, C02F 3/10, C02F 9/00

(54) **Apparatus for water treatment**

(30) Priority: 28.08.1997 GB 9718065
(71) Applicant: Hozelock Limited, Aylesbury, Buckinghamshire HP17 8JD (GB)
(72) Inventor: Griffiths, Neale Frederick, Aylesbury, Buckinghamshire, HP21 8SL (GB); Boddy, Andrew David, Aylesbury, Buckinghamshire, HP21 8SA (GB)
(74) Representative: Morton, Colin David

(57) **Abstract**

Apparatus for water treatment comprises a container with a removable lid member (6) providing access to a water treatment chamber (4). A filter medium, such as open-cell foam (26) is located within the chamber for filtration of water. The lid member (6) is adapted to engage the water treatment chamber (4) to provide a substantially water tight container, such that water may be passed through the filter medium at elevated pressure. An ultra violet emitter (42) is accommodated in a central flow tube (43) which is surrounded by the filter medium, to provide a compact pressurised apparatus.

## Description

This invention relates to apparatus for water treatment. The invention is particularly, but not exclusively, applicable to the treatment of water used in ponds, aquaria and fish farming. The invention may also be applicable to the treatment of water from other sources, for example waste water treatment plants.

The invention aims to provide apparatus for water treatment which includes both a filter medium (such as an open celled material) and an ultra violet emitter for biological treatment of the water, in a compact arrangement.

According to the invention there is provided apparatus for water treatment comprising a container having an inlet and an outlet for ingress and egress of water from and to a body of water to be treated, the container comprising a water treatment chamber, and a removable lid member to provide access to the water treatment chamber; and wherein a filter medium is located within the chamber for mechanical filtration of water; wherein the lid member is adapted to engage the water treatment chamber to provide a substantially water tight container and wherein the apparatus comprises an ultra violet emitter for subjecting the water to ultra violet radiation for biological treatment.

Preferably the ultra violet emitter is located within the water treatment chamber, between the inlet and the outlet.

By locating the ultra violet emitter within the water treatment chamber, a space efficient arrangement is provided, and the relatively delicate ultra violet emitter is protected from external mechanical damage.

Two embodiments of the invention will now be described, by way of example only, with reference to the following illustrative drawings, in which:
**Figure 1** is a perspective view of water treatment apparatus according to a first embodiment of the invention;
**Figure 2** is a plan view of the apparatus of Figure 1;
**Figure 3** is a sectional view on line III-III of Figure 2;
**Figure 4** is a sectional view on line IV-IV of Figure 2; and
**Figures 5 to 8** are views corresponding to those of Figures 1 to 4, but show a second embodiment of the invention.

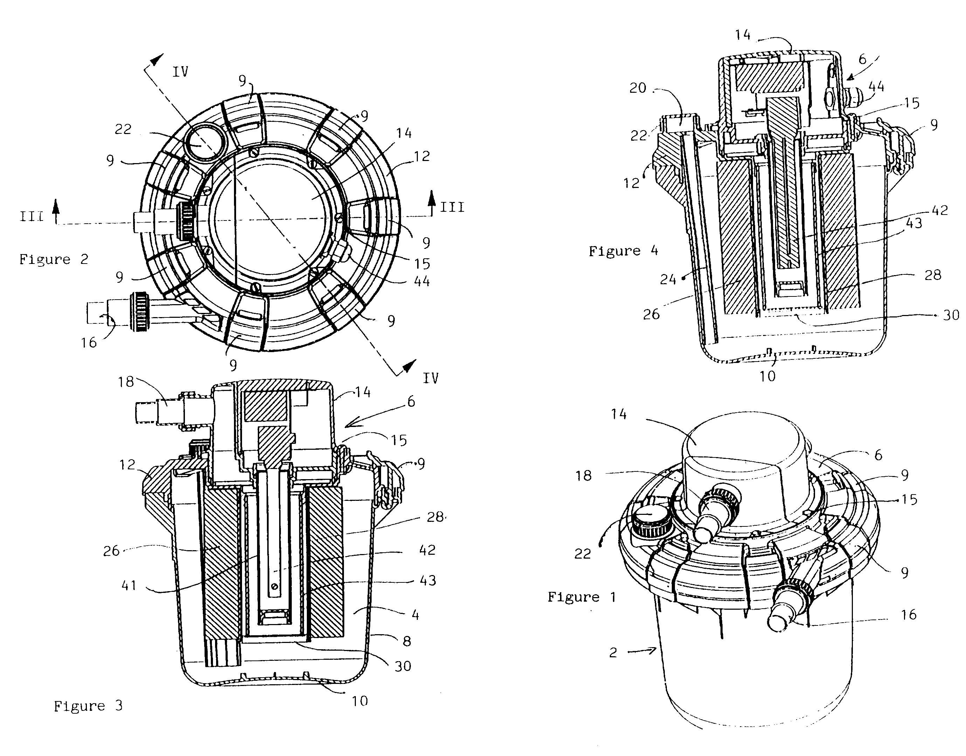

As can be seen in Figures 1 to 4, water treatment apparatus comprises a container 2 having a water treatment chamber 4 and a lid member 6. The chamber 4 is of generally circular cross section, and its side walls 8 taper slightly inwardly towards the base 10. The lid member 6 is rotatably mounted for sealing engagement with the chamber 4, such that the container 2 is able to withstand entry of water under pressure. The lid member 6 is releasably fastened in position on the chamber 4 by seven quick release clamps 9.

The lid member 6 comprises an outer member 12 and an inner member 14. The inner member 14 is rotatably mounted within the outer member 12, and is held in the desired position by releasable screws 15. A water inlet 16 is provided in the outer member 12 of the lid 6, and a primary water outlet 18 is provided in the inner member 14. The inlet 16 is located such that water enters the chamber 4 tangentially. The screws 15 enable the relative angular orientation of the inlet 16 and outlet 18 to be adjusted to suit a particular installation.

The outer member 12 of the lid 6 is also provided with a secondary outlet 20, provided with a screw-threaded blanking cap 22. The secondary outlet 20 communicates with the water treatment chamber 4 via bypass duct 24 (Figure 4) provided on the inner wall of the chamber 4.

Filtration medium in the form of an open cell foam material, such as expanded polyether, is provided within the water treatment chamber 4. This material is totally porous and permits liquid flow through it in all directions, so that if a localised blockage occurs, liquid can flow around the blockage quite readily. The expanded polymer is fairly resilient, and when removed from the water, very little liquid is retained, because it drains out from the open cell lattice-type structure.

The open cell foam material is provided in the form of a cartridge 26, in the shape of a sleeve, supported on a collection tube 28 supported by the inner member 14 of the lid member 6. The collection tube 28 comprises perforated gauze, and its internal space communicates with the primary outlet 18. The base of the collection tube 28 is capped off at 30 to prevent the water bypassing the foam filter cartridge 26. The external surface of the cartridge may be shaped or profiled in order to increase the outside surface area.

The inner member 14 of the lid member 6 carries an ultra violet emitter comprising a central emitter element 42 surrounded by an emitter tube 41. The emitter projects downwardly into the chamber 4, being surrounded by a central flow tube 43 which has an open lower end and is located within the collection tube 28. Electrical power for the ultra violet emitter is supplied to the inner member 14 by means of an electrical cable access 44.

In use, water is pumped under pressure from the pond, or other body of water to be treated, and enters water treatment chamber 4 tangentially through inlet 16. The tangential entry of the water induces swirl flocculation. a centrifugal effect which separates out heavy solids and allows them to drop to the bottom of the unit. This is the first stage of filtration.

The water then passes under pressure through the foam cartridge 26. The foam provides the second level of mechanical filtration on its surface. The third level of filtration is also provided by the foam as the bulk volume of the foam also provides an environment in which nitrifying bacteria can be established, which results in a biological filtration action.

After the water has passed through the foam cartridge 26, it flows radially inwardly through the perforated wall of the tube 28, to enter the space between the tubes 28 and 43. After this, the water enters the open lower end of the tube 43 and passes along the complete length of the tube 43, being treated by ultra violet radiation during this passage. This provides an additional level of filtration specifically to eliminate green water algae by exposure to ultra violet radiation. The treated water then passes out through the primary outlet 18 and returns to the pond.

As the water entering the container is pressurised, the power of the pump head forces the water through the foam cartridge 26, which increases the time period between cleaning, reduces the surface area of the foam, and improves the mechanical filtration efficiency.

Because the filter unit does not rely upon gravity to feed in the water, the unit may be positioned wherever convenient for the user, for example it may be discretely buried in the ground, and/or it may be located at some distance from the pond.

When the foam cartridge 26 does require cleaning, the pump is switched off and the quick release clamps are opened to remove the lid member 6. The foam cartridge 26 may then be removed from the collection tube 28 and washed in the water which remains in the water treatment chamber 4. The unit is then re-assembled.

The blanking cap 22 is removed from the secondary outlet 20, and may then be used to close the primary outlet 18. When the pump is now switched on for a short time. It has the effect of purging the majority of the sludge and dirty water from the chamber 4, by re-routing the water outflow up through the bypass duct 24 and out of the secondary outlet 20. A hose, or similar means may be attached to the outlet 20 to direct the dirty water down a drain, or otherwise, as required by the user.

Once the chamber 4 and foam cartridge 26 have been cleaned, the blanking cap 22 is removed from the primary outlet 18 and replaced on the secondary outlet 20, and the pump may then be switched on, for normal water treatment to recommence.

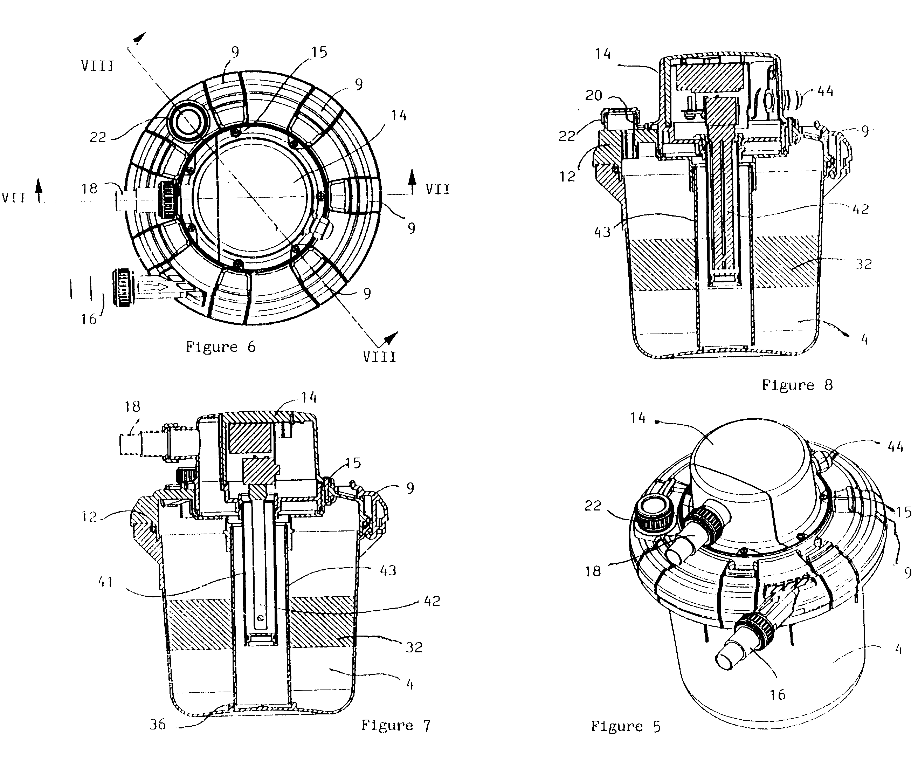

In the embodiment of Figures 5 to 8, where corresponding parts bear the same reference numerals, the foam cartridge 26 and tube 28 of the first embodiment are replaced by a filter 32 in the form of an open cell foam disc surrounding the central flow tube 43, the lower end of which terminates a short distance from a cylindrical bead or rim 36 on the base 10. Thus, a small annular gap, of the order of 5mm to 10mm wide, is defined between the lower end of the tube 43 and the base 10. After water has passed through the filter 32, it passes through this gap, flows up the tube 43 where it is exposed to ultra violet radiation to remove biological activity, finally leaving the apparatus by an outlet 18.

After prolonged use, the filter 32 will tend to become clogged and the consequent increase in water pressure above the filter 32 will cause the latter to slide down the tube 43 until, eventually, the filter 32 will reach the bottom of the chamber 4 and close the annuler gap between the bead or rim 36 and the lower end of the tube 43, signalling to the user that the foam needs to be cleaned.

The embodiment of FiguresS to 8 does not require a duct 24, the secondary outlet 20 communicating directly with the space above the filter 32.

## Claims

1. Apparatus for water treatment comprising a container having an inlet and an outlet for ingress and egress of water from and to a body of water to be treated, the container comprising a water treatment chamber, and a removable lid member to provide access to the water treatment chamber; and wherein a filter medium is located within the chamber for mechanical filtration of water; wherein the lid member is adapted to engage the water treatment chamber to provide a substantially water tight container and wherein the apparatus comprises an ultra violet emitter for subjecting the water to ultra violet radiation for biological treatment.

2. Apparatus according to claim 1, characterised in that the ultra violet emitter is located within the water treatment chamber, between the inlet and outlet in the water now path.

3. Apparatus according to claim 2, wherein the ultra violet emitter is positioned within a central flow tube surrounded by the filter medium, the water passing through the filter medium before entering the flow tube where it is subjected to ultra violet radiation.

4. Apparatus according to claim 3, wherein the flow tube has an open lower end by which water enters the flow tube, the water being subjected to ultra violet radiation during its vertical passage up the flow tube.

5. Apparatus according to any of claims 3 or 4, wherein the filter medium is an annular body of a foam material located in the chamber and surrounding the central flow tube.

6. Apparatus according to any of the preceding claims, wherein the angular position of the inlet is variable with respect to the angular position of the outlet.

7. Apparatus according to claim 6, wherein the inlet and outlet are located on the lid member.

8. Apparatus according to claim 7, wherein the lid member comprises an outer member, and an inner member which is rotatably adjustable with respect to the outer member.

9. Apparatus according to claim 8, wherein the inlet is located on one of said inner and outer members, and the outlet is located on the other of said members.

10. Apparatus as claimed in any one of the preceding claims wherein the container further comprises a secondary outlet for egress of water from the water treatment chamber; and means for selectively opening and closing the primary and secondary outlets.
